# EUROPEAN PATENT SPECIFICATION

(11) **EP 4 357 830 B1**
(45) Date of publication and mention of the grant of the patent: **25.02.2026**
(21) Application number: 22823764.0
(22) Date of filing: 14.01.2022
(51) Int. Cl.: G02B 7/04, G03B 17/12, G02B 7/02

(54) **LENS APPARATUS AND PHOTOGRAPHING APPARATUS**
LINSENVORRICHTUNG UND FOTOGRAFIEVORRICHTUNG
APPAREIL DE LENTILLE ET APPAREIL DE PHOTOGRAPHIE

(30) Priority: 17.06.2021 CN 202121354108 U
(43) Date of publication of application: 24.04.2024
(73) Proprietor: Hangzhou Microimage Software Co., Ltd., Hangzhou, Zhejiang 310051 (CN)
(72) Inventor: YANG, Jinhua, Hangzhou, Zhejiang 310051 (CN); YUAN, Weijun, Hangzhou, Zhejiang 310051 (CN)
(74) Representative: Goddar, Heinz J.
(86) International application number: PCT/CN2022/072087
(87) International publication number: WO 2022/262268

(56) References cited:
- CN-A- 109 669 252
- CN-A- 109 669 252
- CN-U- 212 364 685
- CN-U- 212 905 659
- CN-U- 216 118 167
- CN-Y- 201 017 094
- CN-Y- 201 017 094
- GB-A- 747 153

## Description

### TECHNICAL FIELD

This application relates to the technical field of photographing apparatuses, and in particular to a lens apparatus and a photographing apparatus.

### BACKGROUND

At present, a lens holder and a lens barrel of a lens apparatus are connected by a thread structure, through which the lens holder and the lens barrel are rotated relative to each other to enable the lens holder and the lens barrel to move relative to each other in an axial direction, thereby realizing the purpose of focusing.

CN109669252A relates to an anti-impact lens and an assembling method thereof. The anti-impact lens comprises a lens cone and an optical system arranged in the lens cone, wherein the optical system comprises a positive lens A and a positive lens B which are arranged along a front-to-back incidence direction of light rays in sequence; a focusing ring is rotationally arranged at the outer side of the middle part of the lens cone in a sleeving way; the focusing ring and the lens cone are fixed through a focusing ring clamping ring; a connecting seat is arranged at the outer side of the rear end of the lens cone in a sliding and sleeving way; the front end of the connecting seat is in threaded connection with the focusing ring; an annular connecting flange is arranged at the middle part of the connecting seat; a connecting groove which is beneficial for insertion of the rear end of the focusing ring is formed in the front end surface of the connecting flange.

CN201017094Y relates to a projection camera lens used on large-screen combined tiled display walls; the lens combination of the camera lens consists of 11 groups of 12-piece lenses of a single negative lens, a single negative lens, a single negative lens, a single positive lens, a single negative lens, a single positive lens, a single negative lens, a single positive lens, a doublet lens and a single positive lens which are arranged in imaging sequence. All these lenses are fixed in a lens barrel in turns; the front end of the lens combination is equipped with a focusing ring which is connected with the lens barrel by threads and with a bayonet ring groove which is equipped on the front end of the main body shell in a sliding way by a connection pin.

### SUMMARY

Embodiments of the present application aim to provide a lens apparatus and a photographing apparatus as set forth in the appended claims.

With embodiments of the present application, a focusing ring is disposed around a lens holder and is connected with a lens barrel. When the focusing ring is rotated about an axis relative to the lens holder, the focusing ring is moved in the axis relative to the lens holder, and the lens barrel may be moved in the axis relative to the lens holder with rotation of the focusing ring, thereby realizing the purpose of focusing. There is no relative rotation between the lens barrel and the lens holder, which prevents the imaging quality from being affected by dirt resulting from rotating friction between the lens holder and the lens barrel during the focusing process.

### BRIEF DESCRIPTION OF DRAWINGS

FIG. 1 is a cross-sectional view of a lens apparatus according to an embodiment of the present application.
FIG. 2 is a schematic structural diagram of a lens apparatus according to an embodiment of the present application.
FIG. 3 is a schematic structural diagram of a lens barrel according to an embodiment of the present application.
FIG. 4 is a schematic structural diagram of a copper ring according to an embodiment of the present application.
FIG. 5 is a schematic structural diagram of a lens holder according to an embodiment of the present application.
FIG. 6 is a schematic structural diagram of a focusing ring according to an embodiment of the present application.

Description of reference numerals:
100-lens barrel, 101-axis, 110-annular groove,
200-lens holder, 201-base, 210-accommodating cavity,
300-focusing ring,
410-first pin, 420-second pin,
500-copper ring, 510-circular hole, 520-waist-shaped hole,
600-first seal,
700-second seal,
800-third seal,
900-stopper, 910-recess, 920-mounting groove,
A-first direction,
B-second direction,
h-first length,
H-second length.

### DETAILED DESCRIPTION

Technical solutions in embodiments of the present application will be clearly and completely described below in conjunction with the accompanying drawings in the embodiments of the present application. It is apparent that the described embodiments are a part of embodiments of the present application, and not all of the embodiments. Based on the embodiments in the present application, all other embodiments obtained by those ordinary skilled in the art without any creative efforts fall within the scope of protection of the present application.

Terms in the specification and claims of the present application such as "first," "second" are used to distinguish between similar objects and are not intended to describe a particular order or sequence. It should be understood that the terms so used are interchangeable, where appropriate, such that the embodiments of the present application may be implemented in an order other than those illustrated or described herein, and that objects distinguished by "first," "second," and the like are generally of the same type without limiting the number of the objects, e.g., the first object may be one or more.

During rotation of a lens holder relative to a lens barrel of a lens apparatus, dirt resulting from rotating friction between the lens holder and the lens barrel may fall into a lens or onto a sensor surface behind the lens holder, thereby affecting the imaging quality.

In view of this, embodiments of the present application provide a lens apparatus and a photographing apparatus.

Embodiments of the present application will be described in detail below by way of specific embodiments and application scenarios thereof in conjunction with the accompanying drawings.

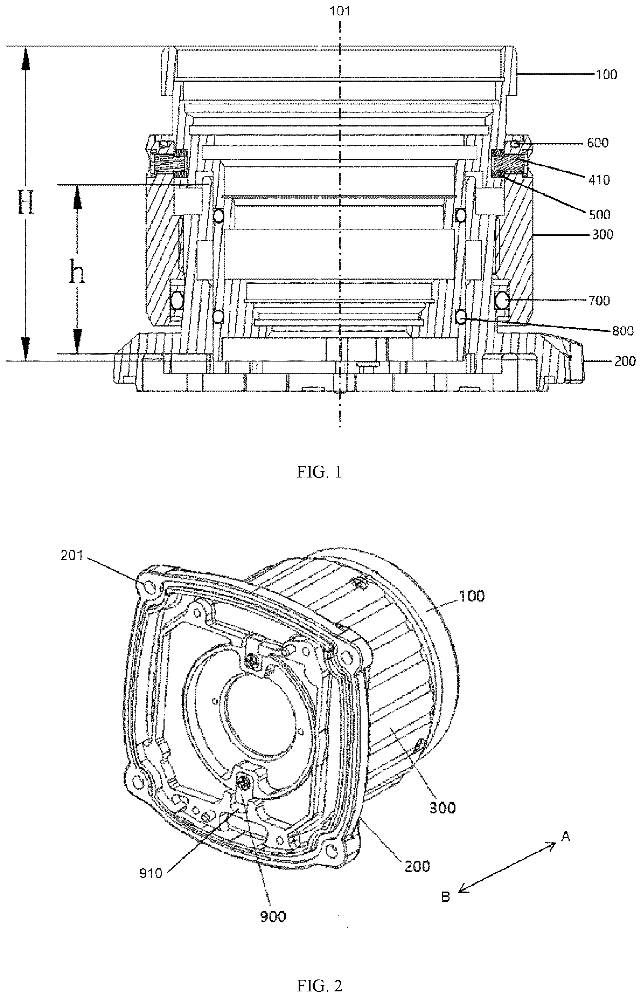

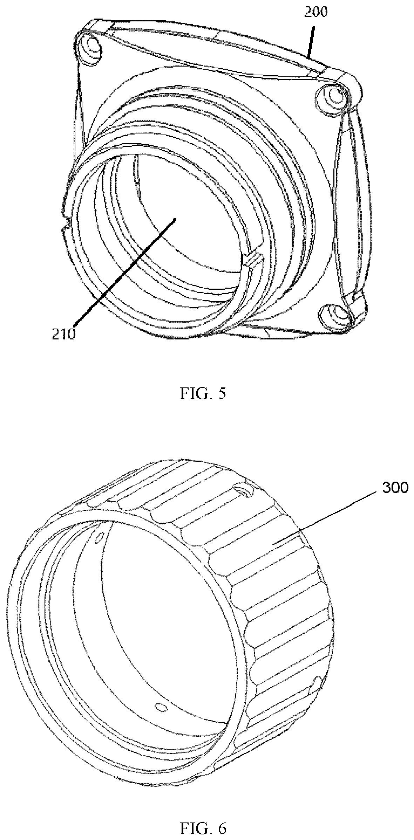

As shown in FIGS. 1 to 6, the lens apparatus includes a lens barrel 100, a lens holder 200, and a focusing ring 300. The focusing ring 300 is disposed around the lens holder 200, and the focusing ring 300 is threaded with the lens holder 200. The focusing ring 300 may be provided with internal threads on an inner wall thereof, and the lens holder 200 may be provided with external threads on an outer surface thereof that are matched with the internal threads. The focusing ring 300 is connected with the lens barrel 100, and the focusing ring 300 is rotatable about an axis 101 of the lens barrel 100 relative to the lens barrel 100, and the lens barrel 100 is movable in the axis 101 relative to the lens holder 200 with the rotation of the focusing ring 300. The focusing ring 300 is provided with patterns on a surface thereof to allow a user's hand to exert force when rotating the focusing ring 300. In the present application, the lens barrel 100 and the lens holder 200 are arranged coaxially, that is, the axis of the lens barrel 100 coincides with an axis of the lens holder 200.

During the focusing operation, the user rotates the focusing ring 300, such that the focusing ring 300 rotates about the axis relative to the lens holder 200. Under the action of the threads, the focusing ring 300 moves in the axis relative to the lens holder 200, and drives the lens barrel 100 connected thereto to move in the axis relative to the lens holder 200 until the focusing operation is completed.

In the present application, there is no thread structure in the lens barrel 100 and the lens holder 200, and the focusing ring 300 is rotatable about the axis 101 of the lens barrel 100 relative to the lens barrel 100. In this way, when the focusing ring 300 drives the lens barrel 100 to move in the axis, there is no relative rotation between the lens barrel 100 and the lens holder 200, which avoids the problem that the imaging quality is affected by dirt resulting from the rotating friction between the lens holder 200 and the lens barrel 100 during the focusing process.

In addition, after the focusing operation is completed, if the focusing ring 300 is moved in the axis relative to the lens holder 200, a blurred image may be captured. In view of this, the lens holder 200 and the focusing ring 300 in the present application are connected through a thread fit, as described above. The thread-fit connection is reliable, which can avoid the above problem, resulting in good optical axis stability of the lens apparatus in the present application. Furthermore, the focusing ring 300 is disposed around the lens holder 200, and the thread structure between the lens holder 200 and the focusing ring 300 is isolated from an interior space of the lens holder 200. Therefore, when the focusing ring 300 and the lens holder 200 are rotated, the dirt resulting from thread engagement may not enter into the interior of the lens holder 200.

In an embodiment according to the present application, the focusing ring 300 is provided with a first connector, and the lens barrel 100 is provided with an annular groove 110 around the axis 101. An end of the first connector extends into the annular groove 110, the first connector is rotatably fit with the annular groove 110 in a direction around the axis 101, and the first connector is limitably fit with an inner wall of the annular groove 110 in an extension direction of the axis 101.

In an optional embodiment, the first connector is a pin connected to the focusing ring 300, which extends into the annular groove 110 through the focusing ring 300. When the focusing ring 300 is moved in the axis relative to the lens holder 200, a portion of the pin in the annular groove 110 pushes the lens barrel 100 to move in the axis. In another optional embodiment, the first connector is a protrusion disposed on the focusing ring 300, which extends into the annular groove 110. When the focusing ring 300 is moved in the axis relative to the lens holder 200, the projection pushes the lens barrel 100 to move in the axis.

In the above embodiments, using the lens apparatus for a long time may cause wear of the first connector, and the fit accuracy between the worn first connector and the inner wall of the annular groove 110 is deteriorated, which may affect the focusing results.

In order to solve the above problem, in an embodiment according to the present application, a second connector is provided in the annular groove 110 and is slidable along the annular groove 110, and the first connector is connected with the second connector. The second connector may be made of a wear-resistant material with good wear resistance, and is made of copper.

In an optional embodiment, the second connector is in clearance fit with the annular groove 110 in the extension direction of the axis 101, to allow the second connector to slide along the annular groove 110. A fit clearance between the second connector and the annular groove 110 may be about 0.01-0.03mm to prevent the lens apparatus from being loosened under vibration shock conditions where the fit clearance is too large.

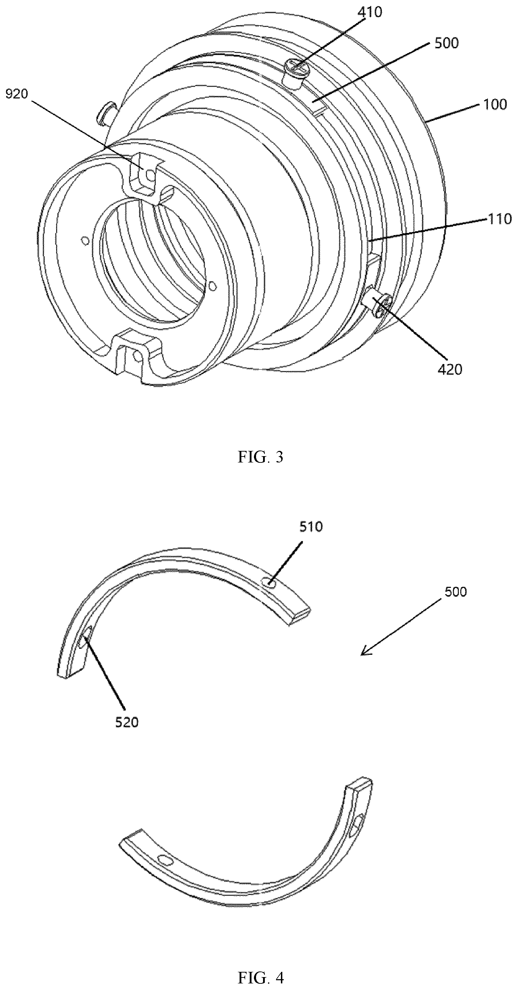

The second connector includes an arcuate member. A central angle of the arcuate member may be set to about 100° to 130°, and there are two arcuate members. In the invention the arcuate member includes an unclosed copper ring 500, as shown in FIG. 4. In other examples not according to the invention, there may be one arcuate member, and the copper ring 500 may be a closed ring. The second connector is provided with a first connecting hole and a second connecting hole, and the first connector includes a first pin 410 and a second pin 420. The first pin 410 is connected with the first connecting hole, and the second pin 420 is connected with the second connecting hole.

In an example not according to the invention, the first connecting hole and the second connecting hole may each be configured as a circular hole 510. However, such a structure requires high processing accuracy, and is prone to a problem that the first pin 410 or the second pin 420 cannot be matched with the circular hole 510 due to processing errors. In another example not according to the invention, the first connecting hole and the second connecting hole may each be configured as an elongated hole. Such a structure requires relatively low processing accuracy, but the first pin 410 or the second pin 420 may slide in the corresponding elongated hole, causing a wobble between the focusing ring 300 and the second connector.

In order to solve the above problem, in an embodiment according to the present application, the first connecting hole is provided as a circular hole 510, and the second connecting hole is provided as an elongated hole, where a length direction of the elongated hole is the same as a through direction of the annular groove 110. For example, the elongated hole may be provided as a waist-shaped hole 520. There may be a plurality of circular holes 510 arranged in a centrosymmetric manner, and a plurality of waist-shaped holes 520 arranged in a centrosymmetric manner. As shown in FIG. 4, there are two circular holes 510 and two waist-shaped holes 520. In this case, the two circular holes 510 are arranged in a centrosymmetric manner, and the two waist-shaped holes 520 are arranged in a centrosymmetric manner.

During assembly, the first pin 410 passes through the focusing ring 300 to fit with the circular hole 510, and then the second pin 420 passes through the focusing ring 300 to fit with the waist-shaped hole 520. This can reduce the requirement for the processing accuracy and the difficulty of assembly, improve the manufacturability, and prevent the wobble between the focusing ring 300 and the second connector.

One of the lens holder 200 and the lens barrel 100 is provided with a guide protrusion, and the other of the lens holder 200 and the lens barrel 100 is provided with a guide recess. The guide protrusion is slidably fit with the guide recess in the extension direction of the axis 101, and the guide protrusion is limitably fit with the guide recess in a circumferential direction of the lens barrel 100. In an optional embodiment, the guide protrusion is a convex rib provided on the lens barrel 100 or the lens holder 200, where the convex rib may be integrally formed with the lens barrel 100 or the lens holder 200. In the present application, the guide protrusion includes a stopper 900 removably connected to the lens barrel 100 or the lens holder 200 through a fastener such as a screw, and the guide recess includes a recess 910 corresponding to the stopper 900 provided on the lens holder 200 or the lens barrel 100, as shown in FIG. 2.

The guide protrusion and the guide recess are provided such that the lens barrel 100 can only move in the axis 101 relative to the lens holder 200, thereby preventing the lens holder 200 and the lens barrel 100 from being rotated relative to each other, and in turn preventing the lens holder 200 and the lens barrel 100 from being rubbed against each other.

In order to enable the mounting flexibility of the lens apparatus, in an embodiment according to the present application, the guide protrusion or the guide recess is provided on an end surface (in the orientation shown in FIG. 1, a bottom end surface) of the lens barrel 100 close to a base 201 of the lens holder 200. For example, the end surface of the lens barrel 100 may be provided with a mounting groove 920 (as shown in FIG. 3), the stopper 900 is removably provided in the mounting groove 920 through a fastener such as a screw, and the recess 910 is provided on a corresponding end surface of the lens holder 200. In this way, the stopper 900 may be mounted after assembly of the lens barrel 100 and the lens holder 200 in place, or may be mounted before assembly of the lens barrel 100 and the lens holder 200.

In an optional embodiment, in order to prevent the lens barrel 100 from excessively protruding from the lens holder 200 in a first direction A, the recess 910 may be provided with a recess bottom at a position of the recess 910 close to a front end of the lens barrel 100. When the lens barrel 100 is moved in the first direction A to a position where the stopper 900 contacts the recess bottom, the lens barrel 100 cannot continue to move in the first direction A due to the blocking effect of the recess bottom. It should be noted that a light incident end of the lens barrel 100 is the front end of the lens barrel 100, and correspondingly, the other end of the lens barrel 100 is a rear end of the lens barrel 100.

In an embodiment according to the present application, a first seal 600 is provided between the focusing ring 300 and the lens barrel 100, and a second seal 700 is provided between the focusing ring 300 and the lens holder 200. The first seal 600 and the second seal 700 are both waterproof seals, which can prevent water from entering the lens apparatus.

In the present application, in order to enable the lens barrel 100 to move in the lens holder 200, there is a fit clearance between the lens barrel 100 and the lens holder 200. The fit clearance may cause the lens barrel 100 to wobble in the lens holder 200, thereby affecting the imaging quality.

In order to solve the above problem, at least one third seal 800 is provided between the lens holder 200 and the lens barrel 100. The third seal 800 serves to fill the fit clearance between the lens barrel 100 and the lens holder 200, to ensure the coaxiality between the lens barrel 100 and the lens holder 200, and to prevent the lens barrel 100 from wobbling in the lens holder 200. In addition, the third seal 800 may also serve to prevent water from entering the lens apparatus. In an embodiment according to the present application, there may be two third seals 800. However, the number of the third seal 800 is not limited thereto.

The lens holder 200 is provided with an accommodating cavity 210, a portion of the lens barrel 100 extends into the accommodating cavity 210, and the lens barrel 100 is slidably fit with the accommodating cavity 210. The accommodating cavity 210 has a first length h, the lens barrel 100 has a second length H, and a ratio of the first length h to the second length H is greater than 0.5.

In this way, a longer portion of the lens barrel 100 extends into the lens holder 200, which ensures the stability of the movement of the lens barrel 100 in the lens holder 200, and prevents the lens barrel 100 from detaching from the lens holder 200.

In an optional embodiment, in order to prevent the lens barrel 100 from excessively protruding from the lens holder 200 in a second direction B, the lens barrel 100 includes a first portion having a diameter less than that of the accommodating cavity 210 and a second portion having a diameter greater than that of the accommodating cavity 210. When the lens barrel 100 is moved in the second direction B, the first portion first enters the accommodating cavity 210, and moves until the second portion contacts the accommodating cavity 210. Due to the blocking effect of the second portion, the lens barrel 100 cannot continue to move in the second direction B. It should be noted that the second direction B is opposite to the first direction A.

Based on the lens apparatus according to any one of the above embodiments of the present application, embodiments of the present application further disclose a photographing apparatus, including the lens apparatus according to any one of the above embodiments. The beneficial effects produced by the photographing apparatus are substantially similar to those produced by the lens apparatus as described above, and thus will not be repeated herein.

Embodiments of the present application have been described above with reference to the accompanying drawings, but the present application is not limited to the specific embodiments as described above. The invention is defined by the appended claims.

## Claims

1. A lens apparatus, comprising a lens barrel (100), a lens holder (200), and a focusing ring (300), wherein
the focusing ring (300) is disposed around the lens holder (200), and the focusing ring (300) is threaded with the lens holder (200);
the focusing ring (300) is connected with the lens barrel (100), and the focusing ring (300) is rotatable about an axis (101) of the lens barrel (100) relative to the lens barrel (100); and
the lens barrel (100) is movable in the axis (101) relative to the lens holder (200) with rotation of the focusing ring (300),
**characterized in that**
the focusing ring (300) is provided with a first pin (410) and a second pin (420), and the lens barrel (100) is provided with an annular groove (110) around the axis (101), wherein two unclosed copper rings (500) are provided in the annular groove (110) and are slidable along the annular groove (110), and each of the copper rings (500) is provided with a circular hole (510) and an elongated hole, the first pin (410) passing through the focusing ring (300) to fit with the circular hole (510), and the second pin (420) passing through the focusing ring (300) to fit with the elongated hole.

2. The lens apparatus according to claim 1, wherein a length direction of the elongated hole is the same as a through direction of the annular groove (110).

3. The lens apparatus according to claim 1 or 2, wherein the elongated hole is a waist-shaped hole (520).

4. The lens apparatus according to claim 3, wherein the circular hole (510) in one of the copper rings (500) and the circular hole (510) in the other one of the copper rings (500) are arranged in a centrosymmetric manner, and the waist-shaped hole (520) in one of the copper rings (500) and the waist-shaped hole (520) in the other one of the copper rings (500) are arranged in a centrosymmetric manner.

5. The lens apparatus according to any one of claims 1 to 4, wherein one of the lens holder (200) and the lens barrel (100) is provided with a guide protrusion, and the other of the lens holder (200) and the lens barrel (100) is provided with a guide recess, wherein the guide protrusion is slidably fit with the guide recess in an extension direction of the axis (101), and the guide protrusion is limitably fit with the guide recess in a circumferential direction of the lens barrel (100).

6. The lens apparatus according to claim 5, wherein the guide protrusion comprises a stopper (900) removably connected to the lens barrel (100) or the lens holder (200), and the guide recess comprises a recess (910) corresponding to the stopper (900) provided on the lens holder (200) or the lens barrel (100).

7. The lens apparatus according to claim 5 or 6, wherein the guide protrusion or the guide recess is provided on an end surface of the lens barrel (100) close to a base (201) of the lens holder (200).

8. The lens apparatus according to any one of claims 1 to 7, wherein a first seal (600) is provided between the focusing ring (300) and the lens barrel (100), and a second seal (700) is provided between the focusing ring (300) and the lens holder (200).

9. The lens apparatus according to any one of claims 1 to 8, wherein at least one third seal (800) is provided between the lens holder (200) and the lens barrel (100).

10. The lens apparatus according to any one of claims 1 to 9, wherein the lens holder (200) is provided with an accommodating cavity (210), a portion of the lens barrel (100) extends into the accommodating cavity (210), and the lens barrel (100) is slidably fit with the accommodating cavity (210).

11. The lens apparatus according to claim 10, wherein the accommodating cavity (210) has a first length (h), the lens barrel (100) has a second length (H), and a ratio of the first length (h) to the second length (H) is greater than 0.5.

12. A photographing apparatus, comprising the lens apparatus according to any one of claims 1 to 11.

## Patentansprüche

1. Linsenvorrichtung, umfassend einen Linsentubus (100), einen Linsenhalter (200) und einen Fokussierring (300), wobei
der Fokussierring (300) um den Linsenhalter (200) angeordnet ist und der Fokussierring (300) mit dem Linsenhalter (200) verschraubt ist;
der Fokussierring (300) mit dem Linsentubus (100) verbunden ist und der Fokussierring (300) um eine Achse (101) des Linsentubus (100) relativ zu dem Linsentubus (100) drehbar ist; und
der Linsentubus (100) entlang der Achse (101) relativ zu dem Linsenhalter (200) mit einer Drehung des Fokussierrings (300) bewegbar ist,
**dadurch gekennzeichnet, dass**
der Fokussierring (300) mit einem ersten Stift (410) und einem zweiten Stift (420) versehen ist und der Linsentubus (100) mit einer Ringnut (110) um die Achse (101) versehen ist, wobei in der Ringnut (110) zwei nicht geschlossene Kupferringe (500) angeordnet sind, die entlang der Ringnut (110) verschiebbar sind, und jeder der Kupferringe (500) mit einem kreisförmigen Loch (510) und einem länglichen Loch versehen ist, wobei der erste Stift (410) den Fokussierring (300) durchsetzt, um in das kreisförmige Loch (510) einzugreifen, und der zweite Stift (420) den Fokussierring (300) durchsetzt, um in das längliche Loch einzugreifen.

2. Linsenvorrichtung nach Anspruch 1, wobei eine Längsrichtung des länglichen Lochs dieselbe wie eine Durchgangsrichtung der Ringnut (110) ist.

3. Linsenvorrichtung nach Anspruch 1 oder 2, wobei das längliche Loch ein tailliertes Loch (520) ist.

4. Linsenvorrichtung nach Anspruch 3, wobei das kreisförmige Loch (510) in einem der Kupferringe (500) und das kreisförmige Loch (510) in dem anderen der Kupferringe (500) zentralsymmetrisch angeordnet sind und das taillenförmige Loch (520) in einem der Kupferringe (500) und das taillenförmige Loch (520) in dem anderen der Kupferringe (500) zentralsymmetrisch angeordnet sind.

5. Linsenvorrichtung nach einem der Ansprüche 1 bis 4, wobei einer von dem Linsenhalter (200) und dem Linsentubus (100) mit einem Führungsvorsprung versehen ist und der andere von dem Linsenhalter (200) und dem Linsentubus (100) mit einer Führungsaussparung versehen ist, wobei der Führungsvorsprung verschiebbar mit der Führungsaussparung in einer Erstreckungsrichtung der Achse (101) zusammenpasst und der Führungsvorsprung begrenzt mit der Führungsaussparung in einer Umfangsrichtung des Linsentubus (100) zusammenpasst.

6. Linsenvorrichtung nach Anspruch 5, wobei der Führungsvorsprung einen Stopper (900) umfasst, der entfernbar mit dem Linsentubus (100) oder dem Linsenhalter (200) verbunden ist, und die Führungsaussparung eine Aussparung (910) umfasst, die dem Stopper (900) entspricht, der an dem Linsenhalter (200) oder dem Linsentubus (100) vorgesehen ist.

7. Linsenvorrichtung nach Anspruch 5 oder 6, wobei der Führungsvorsprung oder die Führungsaussparung an einer Endfläche des Linsentubus (100) nahe einer Basis (201) des Linsenhalters (200) vorgesehen ist.

8. Linsenvorrichtung nach einem der Ansprüche 1 bis 7, wobei eine erste Dichtung (600) zwischen dem Fokussierring (300) und dem Linsentubus (100) vorgesehen ist und eine zweite Dichtung (700) zwischen dem Fokussierring (300) und dem Linsenhalter (200) vorgesehen ist.

9. Linsenvorrichtung nach einem der Ansprüche 1 bis 8, wobei mindestens eine dritte Dichtung (800) zwischen dem Linsenhalter (200) und dem Linsentubus (100) vorgesehen ist.

10. Linsenvorrichtung nach einem der Ansprüche 1 bis 9, wobei der Linsenhalter (200) mit einem Aufnahmehohlraum (210) versehen ist, sich ein Abschnitt des Linsentubus (100) in den Aufnahmehohlraum (210) erstreckt und der Linsentubus (100) verschiebbar mit dem Aufnahmehohlraum (210) zusammenpasst.

11. Linsenvorrichtung nach Anspruch 10, wobei der Aufnahmehohlraum (210) eine erste Länge (h) aufweist, der Linsentubus (100) eine zweite Länge (H) aufweist und ein Verhältnis der ersten Länge (h) zu der zweiten Länge (H) größer als 0,5 ist.

12. Fotografiervorrichtung, umfassend die Linsenvorrichtung nach einem der Ansprüche 1 bis 11.

## Revendications

1. Appareil de lentille, comprenant un barillet de lentille (100), un porte-lentille (200) et une bague de focalisation (300), dans lequel
la bague de focalisation (300) est disposée autour du porte-lentille (200), et la bague de focalisation (300) est filetée avec le porte-lentille (200) ;
la bague de focalisation (300) est reliée au barillet de lentille (100), et la bague de focalisation (300) peut tourner autour d'un axe (101) du barillet de lentille (100) par rapport au barillet de lentille (100) ; et
le barillet de lentille (100) est mobile dans l'axe (101) par rapport au porte-lentille (200) avec la rotation de la bague de focalisation (300),
**caractérisé en ce que**
la bague de focalisation (300) est pourvue d'une première broche (410) et d'une seconde broche (420), et le barillet de lentille (100) est pourvu d'une rainure annulaire (110) autour de l'axe (101), dans lequel deux bagues de cuivre non fermées (500) sont prévues dans la rainure annulaire (110) et peuvent coulisser le long de la rainure annulaire (110), et chacune des bagues de cuivre (500) est pourvue d'un trou circulaire (510) et d'un trou allongé, la première broche (410) passant à travers la bague de focalisation (300) pour s'ajuster avec le trou circulaire (510), et la seconde broche (420) passant à travers la bague de focalisation (300) pour s'ajuster avec le trou allongé.

2. Appareil de lentille selon la revendication 1, dans lequel une direction de longueur du trou allongé est la même qu'une direction de passage de la rainure annulaire (110).

3. Appareil de lentille selon la revendication 1 ou 2, dans lequel le trou allongé est un trou en forme de sablier (520).

4. Appareil de lentille selon la revendication 3, dans lequel le trou circulaire (510) dans l'une des bagues de cuivre (500) et le trou circulaire (510) dans l'autre des bagues de cuivre (500) sont agencés de manière centrosymétrique, et le trou en forme de sablier (520) dans l'une des bagues de cuivre (500) et le trou en forme de sablier (520) dans l'autre des bagues de cuivre (500) sont agencés de manière centrosymétrique.

5. Appareil de lentille selon l'une quelconque des revendications 1 à 4, dans lequel l'un du porte-lentille (200) et du barillet de lentille (100) est pourvu d'une saillie de guidage, et l'autre du porte-lentille (200) et du barillet de lentille (100) est pourvu d'un évidement de guidage, dans lequel la saillie de guidage est ajustée de manière coulissante avec l'évidement de guidage dans une direction d'extension de l'axe (101), et la saillie de guidage est ajustée de manière limitée avec l'évidement de guidage dans une direction circonférentielle du barillet de lentille (100).

6. Appareil de lentille selon la revendication 5, dans lequel la saillie de guidage comprend une butée (900) reliée de manière amovible au barillet de lentille (100) ou au porte-lentille (200), et l'évidement de guidage comprend un évidement (910) correspondant à la butée (900) prévue sur le porte-lentille (200) ou le barillet de lentille (100).

7. Appareil de lentille selon la revendication 5 ou 6, dans lequel la saillie de guidage ou l'évidement de guidage est prévu sur une surface d'extrémité du barillet de lentille (100) à proximité d'une base (201) du porte-lentille (200).

8. Appareil de lentille selon l'une quelconque des revendications 1 à 7, dans lequel un premier joint d'étanchéité (600) est prévu entre la bague de focalisation (300) et le barillet de lentille (100), et un deuxième joint d'étanchéité (700) est prévu entre la bague de focalisation (300) et le porte-lentille (200).

9. Appareil de lentille selon l'une quelconque des revendications 1 à 8, dans lequel au moins un troisième joint d'étanchéité (800) est prévu entre le porte-lentille (200) et le barillet de lentille (100).

10. Appareil de lentille selon l'une quelconque des revendications 1 à 9, dans lequel le porte-lentille (200) est pourvu d'une cavité de réception (210), une partie du barillet de lentille (100) s'étend dans la cavité de réception (210), et le barillet de lentille (100) est ajusté de manière coulissante avec la cavité de réception (210).

11. Appareil de lentille selon la revendication 10, dans lequel la cavité de réception (210) a une première longueur (h), le barillet de lentille (100) a une seconde longueur (H), et un rapport de la première longueur (h) sur la seconde longueur (H) est supérieur à 0,5.

12. Appareil photographique, comprenant l'appareil de lentille selon l'une quelconque des revendications 1 à 11.
